# EUROPÄISCHE PATENTSCHRIFT

(11) **EP 2 350 323 B1**
(45) Veröffentlichungstag und Bekanntmachung des Hinweises auf die Patenterteilung: **23.01.2013**
(21) Anmeldenummer: 09736395.6
(22) Anmeldetag: 29.09.2009
(51) Int. Cl.: C21B 5/06, C21B 7/00, C21B 13/00, F02C 6/00

(54) **VERFAHREN UND VORRICHTUNG ZUM BETRIEB EINES SCHMELZREDUKTIONSVERFAHRENS**
METHOD AND DEVICE FOR OPERATING A SMELTING REDUCTION PROCESS
PROCÉDÉ ET DISPOSITIF PERMETTANT LA MISE EN OEUVRE D'UN PROCESSUS DE RÉDUCTION DE FUSION

(30) Priorität: 23.10.2008 AT 16582008
(43) Veröffentlichungstag der Anmeldung: 03.08.2011
(73) Patentinhaber: Siemens VAI Metals Technologies GmbH, 4031 Linz (AT)
(72) Erfinder: MILLNER, Robert, A-3382 Loosdorf (AT); SCHENK, Johannes, Leopold, A-4040 Linz (AT); WIEDER, Kurt, A-4311 Schwertberg (AT)
(74) Vertreter: Maier, Daniel Oliver
(86) Internationale Anmeldenummer: PCT/EP2009/062607
(87) Internationale Veröffentlichungsnummer: WO 2010/046211

(56) Entgegenhaltungen:
- EP-A- 0 269 609
- EP-A- 0 388 395
- EP-A- 0 488 429
- DE-A1- 2 044 644
- JP-A- 2007 170 245
- B-E. SKÖLD: "ULCOS, the European initiative for CO2-lean steelmaking" NEWSLETTER FROM MEFOS, Dezember 2006 (2006-12), Seiten 1-4, XP002560413 LULEA, SWEDEN

## Beschreibung

Die Erfindung betrifft ein Verfahren zum Betrieb eines Schmelzreduktionsverfahrens, insbesondere mit einem Hochofen oder mit einem Schmelzaggregat und zumindest einem Reduktionsaggregat, wobei Einsatzstoffe, unter Verwendung von Kohlenstoffträgern und gegebenenfalls Zuschlagstoffen, mittels eines Reduktionsgases reduziert und zu Roheisen oder Stahlvorprodukten erschmolzen werden und das umgesetzte Reduktionsgas als Topgas abgeleitet und gereinigt als Exportgas abgeführt wird.

Die Erfindung betrifft weiters eine Vorrichtung zum Betrieb eines Schmelzreduktionsverfahrens mit einem Hochofen, oder mit einem Schmelzaggregat und zumindest einem Reduktionsaggregat, wobei Einsatzstoffe, unter Verwendung von Kohlenstoffträgern und gegebenenfalls Zuschlagstoffen, mittels eines Reduktionsgases reduziert und zu Roheisen oder Stahlvorprodukten erschmolzen werden können und das umgesetzte Reduktionsgas als Topgas abgeleitet und gereinigt, gegebenenfalls gemischt mit gereinigtem und gekühltem Überschussgas aus dem Schmelzaggregat, als Exportgas abgeführt werden kann.

Es ist aus dem Stand der Technik bekannt, dass Prozessgase, wie z.B. Topgas aus Schmelzreduktionseinrichtungen bzw. eine Mischung aus Restgasen in anderen Prozessen und Anlagen verarbeitet werden, wobei häufig die thermische und chemische Energie des Topgases genutzt werden. Problematisch sind eine schwankende Gaszusammensetzung und der niedrige Exportgasdruck nach den Wäschersystemen, die eine effizientere Verarbeitung der Exportgase erschweren. Weiters ist bekannt, dass das Exportgas bzw. reines Topgas in Turbinen zur Erzeugung von kinetischer Energie (Entspannungsturbinen) und Wärme (Gasturbinen) herangezogen wird. Auch hier liegt die Problematik darin, dass das Exportgas aufgrund des geringen Druckes, des niedrigen Heizwertes nach Zumischung von Restgas aus einer CO₂-Entfernungsanlage und der Heizwertschwankungen nur unter Nachteilen in einer Gasturbine bzw. einem Gas- und Dampfkraftwerk eingesetzt werden kann.

Z.B. sind aus der EP 488 429 A2, aus der EP 269 609 A1 und aus der EP 388 395 A1 Verfahren zu entnehmen, bei denen Exportgas bzw. Gas aus einem Einschmelzvergaser zur thermisch in einer Gasturbine bzw. zur Erzeugung von Dampf und in einer Dampfturbine genutzt wird.

Es ist daher eine Aufgabe der Erfindung ein Verfahren und eine Vorrichtung zur Verfügung zu stellen, die eine bessere und effizientere Nutzung der Prozessgase und eine insgesamt verbesserte Energiebilanz im Verbund zwischen einem Schmelzreduktionsverfahren und einer Exportgasnutzung z.B. durch eine Gasturbine bzw. einem Gas- und Dampfkraftwerk bewirkt.

Diese Aufgabe wird durch das erfindungsgemäße Verfahren nach Anspruch 1 und durch die Vorrichtung nach Anspruch 17 gelöst.

Durch das erfindungsgemäße Verfahren wird zumindest ein Teil des Exportgases in einer Gasturbine thermisch verwertet. Das Abgas dieser Gasturbine wird in einer Abwärmedampferzeugung zur Erzeugung von Dampf genutzt. Ein weiterer Teil des Exportgases wird einer Einrichtung zur Abscheidung von CO₂ und/oder dem Niederdruckexportgassystem zugeführt, wobei das dabei entstehende Tailgas, also das Restgas, das durch die Abscheidung des CO₂ entsteht, der Abwärmedampferzeugung zugeführt und zur zusätzlichen Erzeugung von Dampf verbrannt wird. Dadurch wird einerseits das Exportgas durch die Einrichtung zur Abscheidung von CO₂ qualitativ verbessert, dabei dessen Reduktionspotential, also dessen Anteil an reduzierenden Komponenten, angehoben bzw. ein hochwertiges Reduktionsgas erzeugt, das einer metallurgischen Nutzung zugeführt werden kann. Andererseits werden brennbare Anteile des Tailgases einer thermischen Verwertung zugeführt, sodass die Energiebilanz verbessert wird. Vorteilhaft ist dabei, dass das Exportgas, das einen höheren Druck und einen höheren Anteil an brennbaren Komponenten aufweist getrennt von dem Tailgas behandelt wird. Damit wird die Qualität des Exportgases, das in der Gasturbine verbrannt wird, nicht durch das Tailgas vermindert, sodass aufwändige Drucksteigerungen oder auch eine geringere Energieausbeute in der Gasturbine vermieden werden. Insbesondere stellen Brennwertschwankungen, wie sie prozessbedingt im Tailgas bei Einrichtungen zur Abscheidung von CO₂, insbesondere bei Verwendung einer CO₂-Abscheidung mittels Adsorptionsverfahren, nicht vermieden werden können, nun kein Problem mehr für die Gasturbine dar. Der effiziente Betrieb von Gasturbinen setzt ein Brenngas mit weitgehend gleichmäßigem Brennwert voraus, sodass durch eine separate Verarbeitung des Tailgases nur Vorteile in der Gasturbine entstehen.

Da die Reduktionsgasmenge aus dem Einschmelzvergaser nicht gleichmäßig ist, muss eine Regelgasmenge, das sogenannte Überschussgas als Exportgas ausgeschleust werden. Die Menge an Überschussgas ergibt sich aufgrund einer im Reduktionsaggregat benötigten möglichst gleichmäßigen Reduktionsgasmenge und einer Systemdruckregelung im Schmelzaggregat.

Gemäß einer vorteilhaften Ausgestaltung des erfindungsgemäßen Verfahrens wird das Topgas aus dem Hochofen oder aus dem Reduktionsaggregat abgezogen. Neben einer Verwendung eines Teilstromes in der CO₂-Abscheidung, kann das Exportgas einer Gasturbine zugeführt werden und somit die Energiebilanz des Verbundes aus einem Schmelzreduktionsverfahren und einer Gasturbine bzw. einer Abwärmedampferzeugung deutlich verbessert werden kann.

Die Reinigung des Topgases kann mittels einer trockenen Abscheidung, insbesondere einer Schwerkraftabscheidung, und/oder einer Nassabscheidung erfolgen. Das Topgas ist zumeist staubbeladen, sodass die Stäube und feine Feststoffpartikel abgeschieden werden müssen. Eine trockene Abscheidung bietet dabei den Vorteil, dass es zu keiner starken Abkühlung des Topgases kommt. Bei sehr hohen Anforderungen hinsichtlich der Gasqualität kann eine weitgehend vollständige Entfernung der Stäube und Feststoffpartikel durch eine Nassentstaubung erfolgen, wobei diese einer Trockenentstaubung nachgeschaltet oder auch alleine eingesetzt werden kann. Durch die Nassentstaubung kommt es zu einer starken Abkühlung des Topgases. Das trocken oder nass gereinigte Topgas wird als Exportgas bezeichnet und kann nun einer Nutzung in einer Turbine zugeführt werden.

Erfindungsgemäß wird der verbleibende Teil des Exportgases zunächst komprimiert, gekühlt und dann der Einrichtung zur Abscheidung von CO₂ zugeführt. Durch die Druckerhöhung und die Kühlung können die Prozessbedingungen für die Abscheidung von CO₂ angepasst bzw. verbessert werden.

Nach einer besonderen Ausgestaltung des erfindungsgemäßen Verfahrens wird das Exportgas vor der Verbrennung in der Gasturbine in einem Brenngaskompressor komprimiert. Damit kann die Gasturbine in einem wirtschaftlich optimalen Arbeitspunkt eingestellt werden und der Wirkungsgrad erhöht werden.

Gemäß einer geeigneten Ausgestaltung des erfindungsgemäßen Verfahrens wird ein Teil des Exportgases einer Entspannungsturbine zugeführt, wobei es unter Druckabbau entspannt und in weiterer Folge dem Tailgas zugemischt wird. Durch diese Maßnahme kann z.B. bei einem Überangebot an Exportgas, weil die Gasturbine nicht mehr verarbeiten kann, zunächst die Druckenergie genutzt werden, wobei das Exportgas entspannt wird. Die Turbine kann mit einem Generator zur Erzeugung von Strom gekoppelt werden. Das entspannte Exportgas wird in weiterer Folge dem Tailgas zugemischt, wobei sich der Anteil an brennbaren Komponenten insgesamt erhöht.

Eine vorteilhafte Ausgestaltung des erfindungsgemäßen Verfahrens sieht vor, dass das Tailgas, gegebenenfalls nach Mischung mit Exportgas, vor seiner Verbrennung in der Abwärmedampferzeugung in einer Speichereinrichtung zum Ausgleich von Heizwertschwankungen zwischengespeichert wird. Prozessbedingt erzeugt die Einrichtung zur Abscheidung von CO₂ ein Tailgas, das starke unterschiedliche Heizwerte aufweist, wobei die Schwankungen mit einer hohen Frequenz auftreten, also zeitlich nur kurz auftreten und sicher über einen längeren Zeitraum weitgehend ausgleichen. Somit kann durch einen Ausgleich in einer Zwischenspeicherung ein nahezu vergleichmäßigter Brennwert eingestellt und starke Schwankungen bei der Verbrennung vermieden werden. Durch das Zumischen von Exportgas in das Tailgas kann der Brennwert weiter angepasst werden.

Gemäß einer geeigneten Ausgestaltung des erfindungsgemäßen Verfahrens wird das Exportgas vor dessen Verbrennung in der Gasturbine entstaubt. Durch die zusätzliche Entstaubung kann sichergestellt werden, dass durch Reststäube keine Schäden in der Turbine verursacht werden können.

Nach einer weiteren möglichen Ausgestaltung des erfindungsgemäßen Verfahrens wird zum Ausgleich von Heizwertschwankungen bzw. zur Anpassung des Heizwertes im Exportgas vor dessen Verbrennung in der Gasturbine Hüttengase und/oder Erdgas und/oder Stickstoff und/oder Wasserdampf oder Mischungen davon zugesetzt. Gasturbinen benötigen für einen stabilen Betrieb eine möglichst gleichmäßige Heizleistung und einen gleichmäßigen Heizwert. Aufgrund von Schwankungen beim Betrieb des Schmelzreduktionsverfahrens kommt es zu Änderungen in der Zusammensetzung, sodass durch das erfindungsgemäße Einbringen von Hüttengas, wie z.B. Tiegelgase oder Kokereigase, das in Hütten in ausreichenden Mengen zur Verfügung steht oder anderen geeigneten, brennbaren Gasen der Heizwert bei Bedarf erhöht bzw. durch Zumischen von Stickstoff gesenkt werden kann, sodass stabile Bedingungen für die Gasturbine sichergestellt werden können. Besonders kostengünstig ist die Verwendung von Abfallstickstoff aus einer Luftzerlegungsanlage

Gemäß einer speziellen Ausgestaltung des erfindungsgemäßen Verfahrens wird das Exportgas vor dessen Verbrennung in der Gasturbine in einer Puffereinrichtung gepuffert, um eine Vergleichmäßigung der Exportgasmenge sicherzustellen. Durch die beschriebene Maßnahme kann ein sehr stabiler Betrieb der Gasturbine gewährleistet werden.

Nach einer besonderen Ausgestaltung des erfindungsgemäßen Verfahrens wird der in der Abwärmedampferzeugung erzeugte Dampf einer Dampfturbine zugeführt. Durch die Nutzung des in der Abwärmedampferzeugung gebildeten Dampfs kann der Wirkungsgrad des Prozesses deutlich gesteigert werden.

Eine spezielle Ausgestaltung des erfindungsgemäßen Verfahrens sieht vor, dass die Einrichtung zur Abscheidung von CO₂ auf Basis eines Druck-Wechsel- oder eines Vakuum-Druck-Wechselverfahrens, insbesondere auf Adsorptionsbasis, arbeitet. Derartige Verfahren zeichnen sich durch hohe Abscheideraten, sodass das gereinigte Exportgas ein hohes Reduktionspotential aufweist und erneut im Schmelzreduktionsverfahren genutzt werden kann, wodurch sich die Menge an erzeugtem CO₂ je Tonne Roheisen reduzieren lässt.

Eine vorteilhafte Ausgestaltung des erfindungsgemäßen Verfahrens sieht vor, dass nur Exportgas mit einem mittleren Heizwert >4000 kJ/Nm³, insbesondere >5000 kJ/Nm³, der Gasturbine zugeführt wird. Durch eine Steuerung über den Brennwert des Exportgases kann sichergestellt werden, dass die Gasturbine einen hohen Wirkungsgrad erzielt, wobei die Entstaubung, die Puffereinrichtung, der Brenngaskompressor kleiner dimensioniert werden können, da Exportgas mit einem zu geringen Brennwert nicht über diese Einrichtungen der Turbine zugeführt werden müssen. Damit ergeben sich kostengünstigere Bauteile bis hin zur Gasturbine. Weiters wird dadurch der Energieverlust durch die sonst nötige Verdichtung von CO₂ reichem Tailgas und anschließender Entspannung in der Gasturbine vermieden.

Nach einer weiteren vorteilhaften Ausgestaltung des erfindungsgemäßen Verfahrens wird der Heizwert des Exportgases online bestimmt. Durch die online durchgeführte Heizwertbestimmung ist eine stetige Regelung des Heizwertes, insbesondere durch das Zumischen von brennbaren Gasen oder Stickstoff möglich, wodurch ein noch stabilerer Betrieb der Gasturbine ermöglicht wird.

Gemäß einer speziellen Ausgestaltung des erfindungsgemäßen Verfahrens macht der Anteil des Exportgases, der der Gasturbine zugeführt wird 30 bis 90% des Topgases aus. Auf Basis dieser Menge ist einerseits eine Nutzung der brennbaren Komponenten des Exportgases möglich, während noch ausreichend Exportgas der Einrichtung zur Abscheidung von CO₂ zugeführt werden kann, sodass eine Nutzung im Schmelzreduktionsverfahren möglich ist. Die Anteile können auch bei Bedarf angepasst werden, etwa, wenn mehr Exportgas in das Schmelzreduktionsverfahren rückgeführt werden soll.

Eine besonders vorteilhafte Ausgestaltung des erfindungsgemäßen Verfahrens wird erzielt, wenn der Hochofen mit einem sauerstoffhältigen Gas, insbesondere mit einem Sauerstoffanteil >70%, besonders bevorzugt >80%, betrieben wird. Durch den Betrieb mit nahezu reinem Sauerstoff wird die Qualität des Prozessgases bei der Reduktion aber auch die des Topgases erhöht, sodass ein höherer Anteil an reduzierenden bzw. brennbaren Komponenten vorliegt. Damit können der Schmelzreduktionsprozess im Hochofen und die thermische Verwertung des Exportgases verbessert werden.

Eine geeignete Ausgestaltung des erfindungsgemäßen Verfahrens sieht vor, dass zumindest ein Teil des in der Einrichtung zur Abscheidung von CO₂ gereinigten Exportgases, gegebenenfalls nach einer Erwärmung, in den Hochofen oder das Reduktionsaggregat eingebracht wird. Das auf diese Weise gereinigte Exportgas weist ein hohes Reduktionspotential und kann daher zur Reduktion der Einsatzstoffe erneut genutzt werden, sodass z.B. die Menge an Kohlenstoffträgern im Hochofen oder im Reduktionsaggregat reduziert werden kann. Übliche Einsatzstoffe sind dabei Eisenerze, agglomerierte Eisenerzträger (Pellets, Sinter), Eisenerzkonzentrate und zusätzlich Kohlenstoffträger und Zuschlagsstoffe.

Nach einer vorteilhaften Ausgestaltung des erfindungsgemäßen Verfahrens wird zumindest ein Teil des Tailgases oder Gasmischungen mit Tailgas unter Zusatz von Luft und/oder Sauerstoff in einer Heizeinrichtung verbrannt, wobei die Abwärme zur Erwärmung des gereinigten Exportgases vor dessen Eintrag in den Hochofen genutzt wird. Damit kann das Exportgas kostengünstig erwärmt werden, um die für den Eintrag nötige Gastemperatur einzustellen.

Die erfindungsgemäße Vorrichtung zum Betrieb des erfindungsgemäßen Schmelzreduktionsverfahren weist eine Hochofen, oder ein Schmelzaggregat und zumindest ein Reduktionsaggregat auf, wobei Einsatzstoffe, unter Verwendung von Kohlenstoffträgern und gegebenenfalls Zuschlagstoffen, mittels eines Reduktionsgases reduziert und zu Roheisen oder Stahlvorprodukten erschmolzen werden. Das im Schmelzreduktionsverfahren umgesetzte Reduktionsgas wird als Topgas abgeleitet und gereinigt, gegebenenfalls gemischt mit gereinigtem und gekühltem Überschussgas aus dem Schmelzaggregat, als Exportgas abgeführt. Weiters sind eine Gasturbine mit einem Generator zur thermischen Umsetzung zumindest eines Teils des Exportgases und eine Abwärmedampferzeugung vorgesehen, in der mittels der heißen Abgase aus der Gasturbine Dampf erzeugt werden kann. Die erfindungsgemäße Vorrichtung weist eine Einrichtung zur Abscheidung von CO₂ auf, der der zumindest ein Teil des verbleibenden Exportgases zugeführt werden kann, unter Bildung eines von CO₂ gereinigten Gases und eines Tailgases, und eine Speichereinrichtung zur Aufnahme und zum Ausgleich von Heizwertschwankungen im Tailgas, wobei die Speichereinrichtung mit der Abwärmedampferzeugung verbunden ist, welche eine Heizeinrichtung zum Verbrennen des Tailgases zur Bildung von Dampf aufweist. Durch die erfindungsgemäße Vorrichtung kann das Exportgas, das einen hohen Druck und einen hohen Brennwert aufweist, getrennt vom Tailgas, das einen geringen Druck und einen geringeren Brennwert aufweist, verarbeitet werden. Damit ist die Menge an hochwertigem Exportgas zwar geringer, jedoch zeichnet sich dieses durch den höheren Druck und den höheren Brennwert aus, sodass dessen Nutzung in der Gasturbine effizienter erfolgen kann. Durch die separate Verbrennung des Tailgases in der Heizeinrichtung der Abwärmedampferzeugung kann die Energie der brennbaren Komponenten im Tailgas genutzt werden.

Nach einer möglichen Variante der erfindungsgemäßen Vorrichtung ist eine Dampfturbine mit einem Generator zur Entspannung des in der Abwärmedampferzeugung angefallenen Dampfes vorgesehen. Durch die Nutzung der Abwärme aus dem heißen Abgas der Gasturbine und der Abwärme aus der Verbrennung des Tailgases kann die Energieeffizienz des Prozesses gesteigert werden, wobei die Dampfturbine durch Kopplung mit einem Generator zur Stromerzeugung genutzt werden kann.

Zur Reinigung des Topgases kann eine Trockenabscheidungseinrichtung, insbesondere eine Schwerkraftabscheidung, und/oder eine Nassabscheidungseinrichtung vorgesehen werden. Damit kann die nötige Reinheit des Exportgases eingestellt werden, wobei die Trockenabscheidung den Vorteil einer nur geringen Abkühlung des Topgases hat

Gemäß einer weiteren Ausgestaltung der erfindungsgemäßen Vorrichtung ist eine Puffereinrichtung zur Speicherung des Exportgases vor dessen Zufuhr zur Gasturbine vorgesehen, sodass die der Gasturbine zugeführte Exportgasmenge bzw. der Exportgasheizwert gleichmäßig gehalten werden können.

Nach einer besonders vorteilhaften Ausgestaltung der erfindungsgemäßen Vorrichtung weist die Puffereinrichtung eine Messeinrichtung zur Messung des Heizwertes des Exportgases auf, wobei auf Basis der Messung zur Anpassung des Heizwertes Hüttengas und/oder Erdgas und/oder Stickstoff und/oder Wasserdampf zugeführt werden können. Durch die online Messung kann eine Regelung des Heizwertes bzw. der Exportgasmenge realisiert werden, wobei mittels Stellgliedern, wie z.B. Regelventilen die Menge an Exportgas bzw. an zugemischtem Hüttengas und/oder Stickstoff eingestellt werden können.

Nach einer weiteren vorteilhaften Ausgestaltung der erfindungsgemäßen Vorrichtung ist ein Filter, insbesondere ein Elektrofilter, zur Reinigung des Exportgases vor dessen Zufuhr zur Gasturbine vorgesehen. Diese Feinfilterung, gegebenenfalls nach einer vorgeschalteten Staubfilterung des Topgases, stellt sicher, dass eine abrasive bzw. mechanische Belastung der Gasturbine vermieden wird und auch feinste Stäube abgeschieden werden.

Eine vorteilhafte Ausgestaltung der erfindungsgemäßen Vorrichtung sieht vor, dass ein Kompressor zur Druckerhöhung und/oder ein Kühler zum Kühlen des verbleibenden Teils des Exportgases vor dessen Zufuhr in die Einrichtung zur Abscheidung von CO₂ vorgesehen sind. Dies ist nötig, um über eine entsprechende Anpassung der Temperatur und des Drucks einen optimalen Betrieb der Einrichtung zur Abscheidung von CO₂ und der nachfolgenden Nutzung als Reduktionsgas zu ermöglichen.

Gemäß einer möglichen Ausgestaltung der erfindungsgemäßen Vorrichtung ist ein Brenngaskompressor, zur Komprimierung des Exportgases vor dessen Zufuhr zur Gasturbine vorgesehen. Damit kann die Beschickung der Gasturbine mit dem auf die Gasturbine abgestimmten Druckniveau erfolgen.

Gemäß einer speziellen Ausgestaltung der erfindungsgemäßen Vorrichtung ist eine Entspannungsturbine zur Nutzung der Druckenergie des Exportgases vorgesehen, wobei das entspannte Exportgas über eine Leitung der Speichereinrichtung zugeführt werden kann. Somit kann zunächst die Druckenergie genutzt werden, bevor das Exportgas in der Speichereinrichtung mit dem Tailgas gemischt wird. Die Entspannungsturbine kann mit einem Generator zur Stromerzeugung gekoppelt sein.

Eine spezielle Ausgestaltung der erfindungsgemäßen Vorrichtung sieht vor, dass eine mit Tailgas beheizbare Vorwärmeinrichtung zur Erwärmung des von CO₂ gereinigten Exportgases vorgesehen ist, sodass das erwärmte, gereinigte Exportgas dem Hochofen zugeführt werden kann. Durch die Verbrennung des Tailgases in der Heizeinrichtung ist es möglich kostengünstig das gereinigte Exportgas vor dessen Rückführung in den Hochofen zu erwärmen.
Fig. 1: Prozessschema zu einem Schmelzreduktionsverfahren mit einem mit Sauerstoff betriebenen Hochofen
Fig. 2: Prozessschema zu einem Schmelzreduktionsverfahren mit einem mit einer Schmelzreduktionsanlage nach COREX^{®} (stückiges Erz) oder FINEX^{®} (Feinerz)

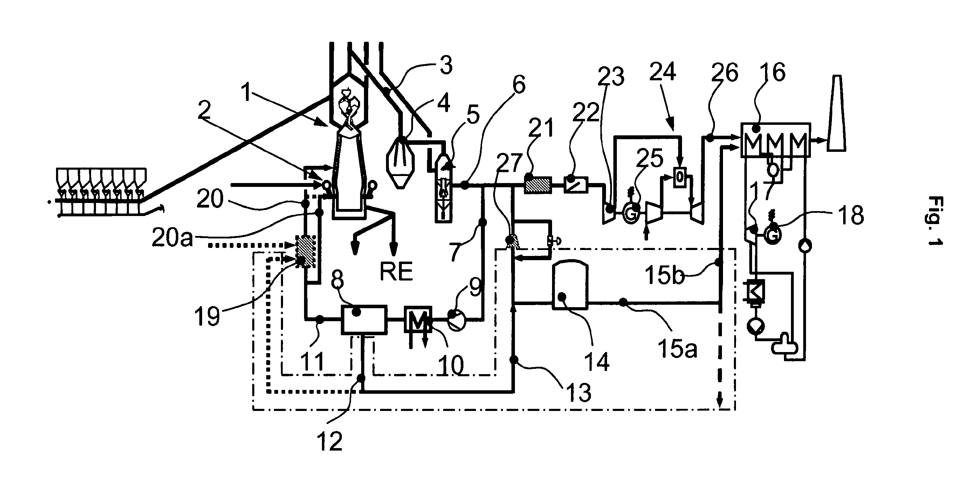

Figur 1 zeigt einen Hochofen 1, der mit Sauerstoff über die Ringleitung 2 versorgt wird. Das Topgas wird über eine Topgasableitung 3 einer Trockenabscheidungseinrichtung 4 und gegebenenfalls auch einer Nassabscheidungseinrichtung 5 zugeführt, wobei aus dem mit Staub beladenen Topgas das Exportgas entsteht, das über die Leitung 6 abgeführt wird. Mittels einer Zuleitung 7 zur Einrichtung zur Abscheidung von CO₂ 8 wird ein Teil des Exportgases mittels eines Kompressors 9 und eines Kühlers 10 der Einrichtung zur Abscheidung von CO₂ 8 zugeführt, wobei dann ein von CO₂ gereinigtes Exportgas, das auch als Recyclegas bezeichnet wird, und ein Tailgas gebildet werden, die über die Recyclegasleitung 11 bzw. die Tailgasleitung 12 und 13 abgeführt werden. Die Tailgasleitung 13 mündet in einer Speichereinrichtung 14 zur Aufnahme des Tailgases, wobei es zu einem Heizwertausgleich im gespeicherten Tailgas kommt. Mittels Tailgaszuleitungen 15a, 15b kann das vorab gespeicherte Tailgas nun einem Abwärmedampferzeuger 16 zugeführt werden. Hier wird durch Verbrennung des Tailgases Dampf erzeugt, der eine Dampfturbine 17 und einen Generator 18 antreibt, wobei Strom erzeugt wird.

In einer besonderen Betriebsweise des erfindungsgemäßen Verfahrens kann das Tailgas auch zur Erwärmung des recycelten Exportgases genutzt werden, wobei das Tailgas einer Vorwärmeinrichtung 19 zugeführt wird, in der das Tailgas verbrannt und Recyclegas erwärmt wird, wobei das erwärmte Recyclegas dann über eine Zuleitung 20 in den Hochofen 1 eingebracht wird. Die Vorwärmeinrichtung kann dabei auch umgangen und das Recyclegas und über eine Zuleitung 20a direkt in den Hochofen eingeleitet werden. Neben der Verwendung des Exportgases zur Herstellung von Recyclegas dient das Exportgas vor allem als Energieträger, wobei die chemische Energie und die Druckenergie genutzt werden kann. Das Exportgas wird einer Puffereinrichtung 21 und einem Filter 22 zugeführt. Hier erfolgen einerseits die Regelung einer möglichst gleichmäßigen Exportgasmenge und die Regelung eines möglichst gleichmäßigen Heizwertes, wobei letztere durch Zugabe von Hüttengas oder Stickstoff eingestellt wird. Dazu wird in der Puffereinrichtung der Heizwert des Exportgases online gemessen und der Heizwert durch Zusatz von Hüttengas oder Erdgas angehoben oder durch Zusatz von Stickstoff bzw. Wasserdampf gesenkt.

Das so behandelte Exportgas wird über einen Brenngaskompressor 23 der Brennkammer einer Gasturbine 24 zugesetzt, die wiederum einen Generator 25 antreibt. Das dabei entstehende heiße Abgas wird über Abgasleitungen 26 der Abwärmedampferzeugung 16 zur Erzeugung von Dampf zugeführt, wobei der Dampf wiederum in der Dampfturbine 17 verarbeitet wird.

Alternativ kann ein Teil des Exportgases oder auch der überwiegende Teil des Exportgases einer Entspannungsturbine 27 zugeführt werden, wobei diese Turbine mit einem nicht dargestellten Generator gekoppelt ist. Das entspannte Exportgas kann dann der Speichereinrichtung 14 zugeführt werden, in der dann das entspannte Exportgas mit dem Tailgas gemischt wird.

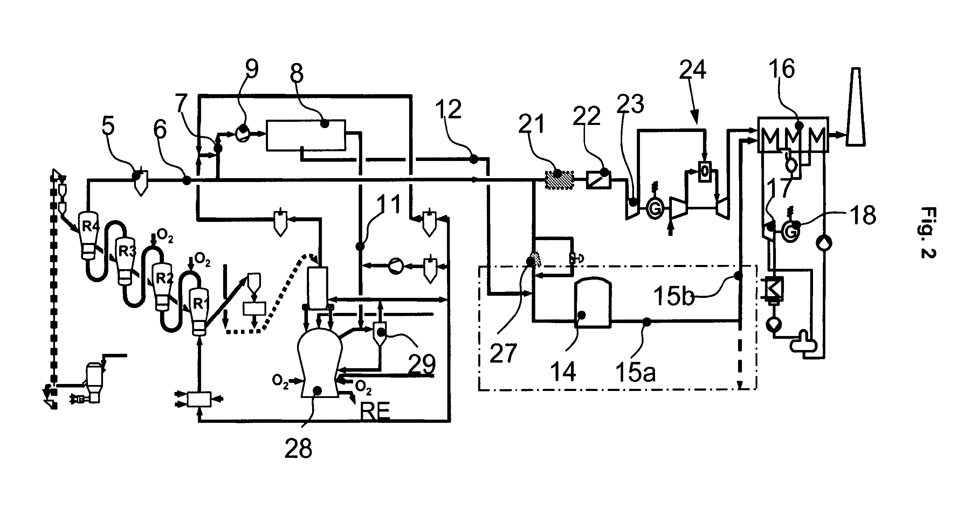

Fig. 2 eine zur Fig. 1 analoge Anlage bzw. ein Prozessschema, sodass gleiche Bauteile mit gleichen Positionsnummern bezeichnet wurden. An Stelle des Hochofen wird das Schmelzreduktionsverfahren in einem Schmelzaggregat 28 und zumindest einem Reduktionsaggregat R durchgeführt. Im konkreten Beispiel sind 4 in Serie geschaltete Reduktionsaggregate R1, R2, R3, und R4 angeordnet, die eine im Schmelzaggregat gebildetes Reduktionsgas zur Reduktion der Einsatzstoffe, insbesondere von Eisenerz, agglomerierten Eisenerzträgern (Pellets, Sinter) oder Erzkonzentraten nutzt. Vorteilhaft ist das Schmelzaggregat 28 als Einschmelzvergaser ausgebildet. Die Reduktionsaggregate werden im Gegenstrom zu den Einsatzstoffen geführt und nach der Verwendung in den Reduktionsaggregaten am letzten Reduktionsaggregat R4 als Topgas abgezogen und in einer Nassabscheidungseinrichtung 5 gereinigt. Das nunmehr gereinigte Topgas kann analog zur Beschreibung der Figur 1 als Exportgas der Gasturbine 23 oder der Einrichtung zur Abscheidung von CO₂ 8 zugeführt werden. Das Tailgas wird wiederum über die Tailgasleitung 12 der Speichereinrichtung 14 zugeführt. Das gereinigte Exportgas, das auch als Recyclegas bezeichnet wird, kann über die Recyclegasleitung 11 der Generatorgas-Entstaubungseinrichtung 29 zugeführt werden. In der Generatorgas-Entstaubungseinrichtung 29 wird das im Schmelzaggregat 28 unter Einsatz von Kohlenstoffträgern erzeugte Generatorgas entstaubt und als Prozessgas bzw. als Reduktionsgas dem Reduktionsaggregat R1 zugeführt. Das in den Reduktionsaggregaten zumindest teilweise reduzierte Material wird als Low Reduced Iron (LRI) bezeichnet und nach einer Agglomeration in das Schmelzaggregat 28 eingesetzt, wo es dann zu Roheisen oder zu Stahlvorprodukten erschmolzen wird.

### Bezugszeichenliste

- 1: Hochofen
- 2: Ringgasleitung
- 3: Topgasableitung
- 4: Trockenabscheidungseinrichtung
- 5: Nassabscheidungseinrichtung
- 6: Leitung
- 7: Zuleitung
- 8: Einrichtung zur Abscheidung von CO₂
- 9: Kompressor
- 10: Kühler
- 11: Recyclegasleitung
- 12: Tailgasleitung
- 13: Tailgasleitung
- 14: Speichereinrichtung
- 15a, 15b: Tailgaszuleitungen
- 16: Abwärmedampferzeuger
- 17: Dampfturbine
- 18: Generator
- 19: Vorwärmeinrichtung
- 20, 20a: Zuleitung
- 21: Puffereinrichtung
- 22: Filter
- 23: Brenngaskompressor
- 24: Gasturbine
- 25: Generator
- 26: Abgasleitungen
- 27: Entspannungsturbine
- 28: Schmelzaggregat
- 29: Generatorgas-Entstaubungseinrichtung

## Patentansprüche

1. Verfahren zum Betrieb eines Schmelzreduktionsverfahren, insbesondere mit einem Hochofen oder mit einem Schmelzaggregat und zumindest einem Reduktionsaggregat, wobei Einsatzstoffe, unter Verwendung von Kohlenstoffträgern und gegebenenfalls Zuschlagstoffen, mittels eines Reduktionsgases reduziert und zu Roheisen oder Stahlvorprodukten erschmolzen werden und das umgesetzte Reduktionsgas als Topgas abgeleitet und gereinigt, gegebenenfalls gemischt mit gereinigtem und gekühltem Überschussgas aus dem Schmelzaggregat, als Exportgas abgeführt wird, **dadurch gekennzeichnet, dass** zumindest ein Teil des Exportgases in einer Gasturbine thermisch verwertet und das Abgas der Gasturbine in einer Abwärmedampferzeugung zur Erzeugung von Dampf genutzt wird, wobei zumindest ein weiterer Teil des Exportgases einer Einrichtung zur Abscheidung von CO₂ zugeführt wird, und das Tailgas dieser Einrichtung in einer Abwärmedampferzeugung zur zusätzlichen Erzeugung von Dampf verbrannt wird und wobei das Tailgas, gegebenenfalls nach Mischung mit Exportgas, vor seiner Verbrennung in der Abwärmedampferzeugung in einer Speichereinrichtung zum Ausgleich von Heizwertschwankungen zwischengespeichert wird.

2. Verfahren nach Anspruch 1, **dadurch gekennzeichnet, dass** das Topgas aus dem Hochofen oder aus dem Reduktionsaggregat abgezogen wird.

3. Verfahren nach einem der Ansprüche 1 oder 2, **dadurch gekennzeichnet, dass** ein Teil des Exportgases zunächst komprimiert, gekühlt und dann der Einrichtung zur Abscheidung von CO₂ zugeführt wird.

4. Verfahren nach einem der Ansprüche 1 bis 3, **dadurch gekennzeichnet, dass** das Exportgas vor der Verbrennung in der Gasturbine in einem Brenngaskompressor komprimiert wird.

5. Verfahren nach einem der Ansprüche 1 bis 4, **dadurch gekennzeichnet, dass** ein Teil des Exportgases einer Entspannungsturbine zugeführt wird, wobei es unter Druckabbau entspannt und in weiterer Folge dem Tailgas zugemischt wird.

6. Verfahren nach einem der Ansprüche 1 bis 5, **dadurch gekennzeichnet, dass** das Exportgas vor dessen Verbrennung in der Gasturbine entstaubt wird.

7. Verfahren nach einem der Ansprüche 1 bis 6, **dadurch gekennzeichnet, dass** zum Ausgleich von Heizwertschwankungen bzw. zur Anpassung des Heizwertes im Exportgas vor dessen Verbrennung in der Gasturbine Hüttengase und/oder Erdgas und/oder Stickstoff und/oder Wasserdampf oder Mischungen davon zugesetzt wird.

8. Verfahren nach einem der Ansprüche 1 bis 7, **dadurch gekennzeichnet, dass** das Exportgas vor dessen Verbrennung in der Gasturbine in einer Puffereinrichtung gepuffert wird, um eine Vergleichmäßigung der Exportgasmenge bzw. -Heizwert sicherzustellen.

9. Verfahren nach einem der Ansprüche 1 bis 8, **dadurch gekennzeichnet, dass** der in der Abwärmedampferzeugung erzeugte Dampf einer Dampfturbine zugeführt wird.

10. Verfahren nach einem der Ansprüche 1 bis 9, **dadurch gekennzeichnet, dass** die Einrichtung zur Abscheidung von CO₂ auf Basis eines Druck-Wechsel- oder eines Vakuum-Druck-Wechselverfahrens, insbesondere nach dem Adsorptionsprinzip, arbeitet.

11. Verfahren nach einem der Ansprüche 1 bis 10, **dadurch gekennzeichnet, dass** nur Exportgas mit einem mittleren Heizwert >4000 kJ/Nm³, insbesondere >5000 kJ/Nm³, der Gasturbine zugeführt wird.

12. Verfahren nach einem der Ansprüche 1 bis 11, **dadurch gekennzeichnet, dass** der Heizwert des Exportgases online bestimmt wird.

13. Verfahren nach einem der Ansprüche 1 bis 12, **dadurch gekennzeichnet, dass** der Anteil des Exportgases, der der Gasturbine zugeführt wird 30 bis 90% des Topgases ausmacht.

14. Verfahren nach einem der Ansprüche 1 bis 13, **dadurch gekennzeichnet, dass** der Hochofen mit einem sauerstoffhältigen Gas, insbesondere mit einem Sauerstoffanteil >70%, besonders bevorzugt >80%, betrieben wird.

15. Verfahren nach einem der Ansprüche 1 bis 14, **dadurch gekennzeichnet, dass** zumindest ein Teil des in der Einrichtung zur Abscheidung von CO₂ gereinigten Exportgases, gegebenenfalls nach einer Erwärmung, in den Hochofen oder das Reduktionsaggregat eingebracht wird.

16. Verfahren nach einem der Ansprüche 1 bis 15, **dadurch gekennzeichnet, dass** zumindest ein Teil des Tailgases oder Gasmischungen mit Tailgas unter Zusatz von Luft und/oder Sauerstoff in einer Heizeinrichtung verbrannt wird, wobei die Abwärme zur Erwärmung des gereinigten Exportgases vor dessen Eintrag in den Hochofen genutzt wird.

17. Vorrichtung zum Betrieb eines Schmelzreduktionsverfahren gemäß einem der Ansprüche 1 bis 17 mit einem Hochofen (1), oder mit einem Schmeizaggregat (28) und zumindest einem Reduktionsaggregat (R1), wobei Einsatzstoffe, unter Verwendung von Kohlenstoffträgern und gegebenenfalls Zuschlagstoffen, mittels eines Reduktionsgases reduziert und zu Roheisen (RE) oder Stahlvorprodukten erschmolzen werden können und das umgesetzte Reduktionsgas als Topgas abgeleitet und gereinigt, gegebenenfalls gemischt mit gereinigtem und gekühltem Überschussgas aus dem Schmelzaggregat (28), als Exportgas abgeführt werden kann, **dadurch gekennzeichnet, dass** eine Gasturbine (24) mit einem Generator zur thermischen Umsetzung zumindest eines Teils des Exportgases vorgesehen ist und eine Abwärmedampferzeugung (16), in der mittels der heißen Abgase aus der Gasturbine (24) Dampf erzeugt werden kann, **dadurch gekennzeichnet, dass** eine Einrichtung zur Abscheidung von CO₂ (8) vorgesehen ist, der zumindest ein Teil des verbleibenden Exportgases zugeführt werden kann, unter Bildung eines von CO₂ gereinigten Gases und eines Tailgases, und eine Speichereinrichtung (14) zur Aufnahme und zum Ausgleich von Heizwertschwankungen im Tailgas vorgesehen ist, wobei die Speichereinrichtung (14) mit der Abwärmedampferzeugung (16) verbunden ist, welche eine Heizeinrichtung zum Verbrennen des Tailgases zur Bildung von Dampf aufweist.

18. Vorrichtung nach Anspruch 17, **dadurch gekennzeichnet, dass** eine Dampfturbine (17) mit einem Generator (18) zur Entspannung des in der Abwärmedampferzeugung (16) angefallenen Dampfes vorgesehen ist.

19. Vorrichtung nach einem der Ansprüche 17 oder 18, **dadurch gekennzeichnet, dass** eine Puffereinrichtung (22) zur Speicherung des Exportgases vor dessen Zufuhr zur Gasturbine (24) vorgesehen ist, sodass die der Gasturbine (24) zugeführte Exportgasmenge bzw. der Exportgasheizwert gleichmäßig gehalten werden können.

20. Vorrichtung nach Anspruch 19, **dadurch gekennzeichnet, dass** die Puffereinrichtung (22) eine Messeinrichtung zur Messung des Heizwertes des Exportgases aufweist, wobei auf Basis der Messung zur Anpassung des Heizwertes Hüttengas und/oder Erdgas und/oder Stickstoff und/oder Wasserdampf zugeführt werden können.

21. Vorrichtung nach einem der Ansprüche 17 bis 20, **dadurch gekennzeichnet, dass** ein Filter (21), insbesondere Elektrofilter, zur Reinigung des Exportgases vor dessen Verdichtung (23) und Zufuhr zur Gasturbine (24) vorgesehen ist.

22. Vorrichtung nach einem der Ansprüche 17 bis 21, **dadurch gekennzeichnet, dass** ein Kompressor (9) zur Druckerhöhung und/oder ein Kühler (10) zum Kühlen des verbleibenden Teils des Exportgases vor dessen Zufuhr in die Einrichtung zur Abscheidung von CO₂ (8) vorgesehen sind.

23. Vorrichtung nach einem der Ansprüche 17 bis 22, **dadurch gekennzeichnet, dass** ein Brenngaskompressor (23), zur Komprimierung des Exportgases vor dessen Zufuhr zur Gasturbine (24) vorgesehen ist.

24. Vorrichtung nach einem der Ansprüche 17 bis 23, **dadurch gekennzeichnet, dass** eine Entspannungsturbine (27) zur Nutzung der Druckenergie des Exportgas vorgesehen ist, wobei das entspannte Exportgas über eine Leitung der Speichereinrichtung (14) zugeführt werden kann.

25. Vorrichtung nach einem der Ansprüche 17 bis 24, **dadurch gekennzeichnet, dass** eine mit Tailgas beheizbare Vorwärmeinrichtung (19) zur Erwärmung des von CO₂ gereinigten Exportgases vorgesehen ist, sodass das erwärmte, gereinigte Exportgas dem Hochofen (1) zugeführt werden kann.

## Claims

1. Method for operating a melt reduction process, in particular with a blast furnace or with a melting assembly and at least one reduction assembly, batch materials being reduced by means of a reduction gas, using carbon carriers and, if appropriate, aggregates, and being melted into pig iron or steel semifinished products, and the reacted reduction gas being diverted as top gas and, purified, if appropriate mixed with purified and cooled excess gas from the melting assembly, being discharged as export gas, **characterized in that** at least part of the export gas is utilized thermally in a gas turbine, and the exhaust gas from the gas turbine is used in waste heat steam generation for generating steam, at least a further part of the export gas being supplied to a device for the separation of CO₂, and the tail gas from this device being burnt in waste heat steam generation for the additional generation of steam and the tail gas, if appropriate after mixing with export gas, intermediately stored, before its combustion in the waste heat steam generation, in a storage device for the compensation of calorific value fluctuations.

2. Method according to Claim 1, **characterized in that** the top gas is drawn off from the blast furnace or from the reduction assembly.

3. Method according to either one of Claims 1 and 2, **characterized in that** part of the export gas is first compressed, cooled and then supplied to the device for the separation of CO₂.

4. Method according to one of Claims 1 to 3, **characterized in that** the export gas is compressed in a fuel gas compressor before combustion in the gas turbine.

5. Method according to one of Claims 1 to 4, **characterized in that** part of the export gas is supplied to an expansion turbine, and it is expanded, along with a pressure reduction, and is subsequently admixed to the tail gas.

6. Method according to one of Claims 1 to 5, **characterized in that** the export gas is dedusted before its combustion in the gas turbine.

7. Method according to one of Claims 1 to 6, **characterized in that** metallurgical gases and/or natural gas and/or nitrogen and/or water vapor or mixtures thereof are added for the compensation of calorific value fluctuations or for adapting the calorific value in the export gas before its combustion in the gas turbine.

8. Method according to one of Claims 1 to 7, **characterized in that** the export gas is buffered in a buffer device before its combustion in the gas turbine, in order to ensure an equalization of the export gas quantity or export gas calorific value.

9. Method according to one of Claims 1 to 8, **characterized in that** the steam generated in the waste heat steam generation is supplied to a steam turbine.

10. Method according to one of Claims 1 to 9, **characterized in that** the device for the separation of CO₂ operates on the basis of a pressure change or vacuum pressure change method, in particular according to the adsorption principle.

11. Method according to one of Claims 1 to 10, **characterized in that** only export gas with a mean calorific value > 4000 kJ/Nm³, in particular
> 5000 kJ/Nm³, is supplied to the gas turbine.

12. Method according to one of Claims 1 to 11, **characterized in that** the calorific value of the export gas is determined online.

13. Method according to one of Claims 1 to 12, **characterized in that** the fraction of the export gas which is supplied to the gas turbine amounts to 30 to 90% of the top gas.

14. Method according to one of Claims 1 to 13, **characterized in that** the blast furnace is operated with an oxygen-containing gas, in particular with an oxygen fraction > 70%, particularly preferably > 80%.

15. Method according to one of Claims 1 to 14, **characterized in that** at least part of the export gas purified in the device for the separation of CO₂ is introduced, if appropriate after heating, into the blast furnace or the reduction assembly.

16. Method according to one of Claims 1 to 15, **characterized in that** at least part of the tail gas or gas mixtures with tail gas is burnt in a heating device, with the addition of air and/or oxygen, the waste heat being used for heating the purified export gas before it is introduced into the blast furnace.

17. Apparatus for operating a melt reduction process according to one of Claims 1 to 17, with a blast furnace (1) or with a melting assembly (28) and at least one reduction assembly (R1), batch materials being reducible by means of a reduction gas, using carbon carriers and, if appropriate, aggregates, and being meltable into pig iron (RE) or steel semifinished products, and the reacted reduction gas being divertible as top gas and, purified, if appropriate mixed with purified and cooled excess gas from the melting assembly (28), being dischargeable as export gas, **characterized in that** a gas turbine (24) with a generator for the thermal reaction of at least part of the export gas is provided and waste heat steam generation (16), in which steam can be generated by means of the hot exhaust gases from the gas turbine (24), is provided, and a device for the separation of CO₂ (8) is provided, to which at least part of the remaining export gas can be supplied, so as to form a gas purified of CO₂ and a tail gas, and a storage device (14) for the absorption and compensation of calorific value fluctuations in the tail gas is provided, the storage device (14) being connected to the waste heat steam generation (16) which has a heating device for the combustion of the tail gas in order to form steam.

18. Apparatus according to Claim 17, **characterized in that** a steam turbine (17) with a generator (18) for expanding the steam which has occurred in the waste heat steam generation (16) is provided.

19. Apparatus according to either one of Claims 17 and 18, **characterized in that** a buffer device (22) for storing the export gas before it is supplied to the gas turbine (24) is provided, so that the export gas quantity supplied to the gas turbine (24) or the export gas calorific value can be kept uniform.

20. Apparatus according to Claim 19, **characterized in that** the buffer device (22) has a measuring device for measuring the calorific value of the export gas, while, based on the measurement, metallurgical gas and/or natural gas and/or nitrogen and/or water vapor can be supplied in order to adapt the calorific value.

21. Apparatus according to one of Claims 17 to 20, **characterized in that** a filter (21), in particular an electrostatic filter, for purifying the export gas before its compression (23) and supply to the gas turbine (24) is provided.

22. Apparatus according to one of Claims 17 to 21, **characterized in that** a compressor (9) for the pressure rise and/or a cooler (10) for cooling the remaining part of the export gas before it is supplied to the device for the separation of CO₂ (8) are/is provided.

23. Apparatus according to one of Claims 17 to 22, **characterized in that** a fuel gas compressor (23) for compressing the export gas before it is supplied to the gas turbine (24) is provided.

24. Apparatus according to one of Claims 17 to 23, **characterized in that** an expansion turbine (27) for utilizing the pressure energy of the export gas is provided, in which case the expanded export gas can be supplied to the storage device (14) via a line.

25. Apparatus according to one of Claims 17 to 24, **characterized in that** a preheating device (19) heatable by means of tail gas is provided for heating the export gas purified of CO₂, so that the heated purified export gas can be supplied to the blast furnace (1).

## Revendications

1. Procédé d'exploitation d'un procédé de réduction de coulée, comprenant en particulier un haut fourneau ou un sous-ensemble de coulée et au moins un sous-ensemble de réduction, dans lequel des charges utilisant des supports d'hydrocarbures et éventuellement des additifs sont réduites au moyen d'un gaz réducteur et fondues en fer brut ou en ébauches d'acier et le gaz de réduction transformé, évacué et purifié en tant que gaz de gueulard, éventuellement mélangé à du gaz excédentaire purifié et refroidi provenant du sous-ensemble de coulée, est évacué en tant que gaz exporté, **caractérisé en ce qu'**au moins une partie du gaz exporté est valorisée thermiquement dans une turbine à gaz et que le gaz d'échappement de la turbine à gaz est utilisé dans un générateur de vapeur à chaleur perdue pour produire de la vapeur, au moins une autre partie du gaz exporté étant acheminée à un dispositif de séparation de CO₂, et le gaz de queue de ce dispositif étant brûlé dans un générateur de vapeur à chaleur perdue pour produire de la vapeur supplémentaire, et le gaz de queue, éventuellement après mélange avec du gaz exporté, étant stocké temporairement, avant sa combustion dans le générateur de vapeur à chaleur perdue, dans un dispositif d'accumulation permettant l'équilibrage des variations de la valeur calorifique.

2. Procédé selon la revendication 1, **caractérisé en ce que** le gaz de gueulard est extrait du haut fourneau ou du sous-ensemble de réduction.

3. Procédé selon une des revendications 1 ou 2, **caractérisé en ce qu'**une partie du gaz exporté est d'abord comprimée, refroidie puis acheminée au dispositif de séparation de CO₂.

4. Procédé selon une des revendications 1 à 3, **caractérisé en ce que** le gaz exporté est comprimé, avant combustion dans la turbine à gaz, dans un compresseur de gaz de combustion.

5. Procédé selon une des revendications 1 à 4, **caractérisé en ce qu'**une partie du gaz exporté est acheminée vers une turbine de détente, où elle est détendue où elle sous baisse de pression et mélangée par la suite au gaz de queue.

6. Procédé selon une des revendications 1 à 5, **caractérisé en ce que** le gaz exporté est dépoussiéré avant sa combustion dans la turbine à gaz.

7. Procédé selon une des revendications 1 à 6, **caractérisé en ce que**, pour équilibrer les variations de la valeur calorifique ou pour adapter l'indice de chauffe dans le gaz exporté avant sa combustion dans la turbine à gaz, des gaz sidérurgiques et/ou du gaz naturel et/ou de l'azote et/ou de la vapeur d'eau ou leurs mélanges sont ajoutés.

8. Procédé selon une des revendications 1 à 7, **caractérisé en ce que** le gaz exporté, avant sa combustion dans la turbine à gaz, est tamponné dans un dispositif de tamponnage afin d'assurer une homogénéisation de la quantité ou de la valeur calorifique du gaz exporté.

9. Procédé selon une des revendications 1 à 8, **caractérisé en ce que** la vapeur produite dans le générateur de vapeur à chaleur perdue est acheminée à une turbine à vapeur.

10. Procédé selon une des revendications 1 à 9, **caractérisé en ce que** le dispositif de séparation de CO₂ fonctionne sur la base d'un procédé d'alternance de pression ou d'alternance de pression et de vide, en particulier suivant le principe de l'adsorption.

11. Procédé selon une des revendications 1 à 10, **caractérisé en ce que** seul du gaz exporté ayant une valeur calorifique moyenne > 4000 kJ/Nm³, en particulier > 5000 kJ/Nm³, est acheminé à la turbine à gaz.

12. Procédé selon une des revendications 1 à 11, **caractérisé en ce que** la valeur calorifique du gaz exporté est définie en ligne.

13. Procédé selon une des revendications 1 à 12, **caractérisé en ce que** la proportion de gaz exporté qui est acheminée à la turbine à gaz représente 30 à 90 % du gaz de gueulard.

14. Procédé selon une des revendications 1 à 13, **caractérisé en ce que** le haut fourneau fonctionne avec un gaz contenant de l'oxygène, en particulier une proportion d'oxygène > 70 %, de manière particulièrement préférentielle > 80 %.

15. Procédé selon une des revendications 1 à 14, **caractérisé en ce qu'**au moins une partie du gaz exporté purifié dans le dispositif de séparation de CO₂ est introduite dans le haut fourneau ou le sous-ensemble de réduction, éventuellement après réchauffement.

16. Procédé selon une des revendications 1 à 15, **caractérisé en ce qu'**au moins une partie du gaz de queue ou des mélanges gazeux contenant du gaz de queue avec ajout d'air et/ou d'oxygène est brûlée dans un dispositif de chauffage, la chaleur perdue étant utilisée pour chauffer le gaz exporté purifié avant son introduction dans le haut fourneau.

17. Dispositif d'exploitation d'un procédé de réduction de coulée selon une des revendications 1 à 17, comprenant un haut-fourneau (1) ou un sous-ensemble de coulée (28) et au moins un sous-ensemble de réduction (R1), dans lequel des charges utilisant des supports d'hydrocarbures et éventuellement des additifs sont réduites au moyen d'un gaz réducteur et fondues en fer brut (RE) ou en ébauches d'acier et le gaz réducteur transformé, évacué et purifié en tant que gaz de gueulard, éventuellement mélangé à du gaz excédentaire purifié et refroidi provenant du sous-ensemble de coulée (28), peut être évacué en tant que gaz exporté, **caractérisé en ce qu'**une turbine à gaz (24) comportant un générateur pour la transformation thermique d'au moins une partie du gaz exporté est prévue, de même qu'un dispositif générateur de vapeur à chaleur perdue (16), dans lequel de la vapeur peut être produite au moyen des gaz chauds provenant de la turbine à gaz (24), **caractérisé en ce qu'**il est prévu un dispositif de séparation de CO₂ (8) auquel au moins une partie du gaz exporté résiduel peut être acheminée, en formant un gaz purifié du CO₂ et un gaz de queue, ainsi qu'un dispositif d'accumulation (14) permettant le stockage et l'équillibrage des variations du gaz de queue, le dispositif d'accumulation (14) étant raccordé au générateur de vapeur à chaleur perdue (16) qui présente un dispositif de chauffage pour brûler le gaz de queue afin de former de la vapeur.

18. Dispositif selon la revendication 17, **caractérisé en ce qu'**une turbine à vapeur (17) équipée d'un générateur (18) permettant de détendre la vapeur incidente dans le générateur de vapeur à chaleur perdue (16) est prévue.

19. Dispositif selon une des revendications 17 ou 18, **caractérisé en ce qu'**un dispositif de tamponnage (22) est prévu pour accumuler le gaz exporté avant son acheminement à la turbine à gaz (24), de manière à ce que la quantité de gaz exporté acheminée à la turbine à gaz (24) ou la valeur calorifique du gaz exporté puissent rester homogènes.

20. Dispositif selon la revendication 19, **caractérisé en ce que** le dispositif de tamponnage (22) présente un dispositif de mesure pour mesurer la valeur calorifique du gaz exporté, du gaz sidérurgique et/ou du gaz naturel et/ou de l'azote et/ou de la vapeur d'eau pouvant être acheminés sur la base de la mesure pour adapter la valeur calorifique.

21. Dispositif selon une des revendications 17 à 20, **caractérisé en ce qu'**un filtre (21), en particulier un électrofiltre, est prévu pour purifier le gaz exporté avant sa compression (23) et son acheminement à la turbine à gaz (24).

22. Dispositif selon une des revendications 17 à 21, **caractérisé en ce qu'**un compresseur (9) permettant d'augmenter la pression et/ou un refroidisseur (10) permettant de refroidir la partie résiduelle de gaz exporté avant son acheminement dans le dispositif de séparation de CO₂ (8) sont prévus.

23. Dispositif selon une des revendications 17 à 22, **caractérisé en ce qu'**un compresseur de gaz de combustion (23) permettant de comprimer le gaz exporté avant son acheminement à la turbine à gaz (24) est prévu.

24. Dispositif selon une des revendications 17 à 23, **caractérisé en ce qu'**une turbine de détente (27) permettant d'utiliser l'énergie de pression du gaz exporté est prévue, le gaz exporté détendu pouvant être acheminé par une conduite au dispositif accumulateur (14).

25. Dispositif selon une des revendications 17 à 24, **caractérisé en ce qu'**un dispositif de préchauffage (19) pouvant être chauffé avec du gaz de queue et permettant de chauffer le gaz exporté purifié du CO₂ est prévu de manière à ce que du gaz exporté chauffé et purifié puisse être acheminé au haut fourneau (1).
